# FASCICULE DE BREVET EUROPEEN

(11) **EP 3 181 951 B1**
(45) Date de publication et mention de la délivrance du brevet: **15.08.2018**
(21) Numéro de dépôt: 16197779.8
(22) Date de dépôt: 08.11.2016
(51) Int. Cl.: F16H 57/04, F01D 25/18, F16N 29/02

(54) **DISPOSITIF DE LUBRIFICATION DE SECOURS D' ARCHITECTURE SIMPLIFIEE POUR UNE BOITE DE TRANSMISSION PRINCIPALE DE PUISSANCE D'UN AERONEF**
NOT-SCHMIERVORRICHTUNG MIT VEREINFACHTEM AUFBAU FÜR EIN HAUPTLEISTUNGSÜBERTRAGUNGSGETRIEBE EINES LUFTFAHRZEUGS
BACKUP LUBRICATION DEVICE WITH SIMPLIFIED ARCHITECTURE FOR A MAIN POWER-TRANSMISSION GEARBOX OF AN AIRCRAFT

(30) Priorité: 17.12.2015 FR 1502623
(43) Date de publication de la demande: 21.06.2017
(73) Titulaire: Airbus Helicopters, 13725 Marignane Cedex (FR)
(72) Inventeur: LAPEYRE, Jean-Victor, 13680 Lançon-de-Provence (FR); EYMARD-DUVERNAY, Gilles, 13700 Marignane (FR)
(74) Mandataire: GPI & Associés

(56) Documents cités:
- FR-A1- 2 685 758
- FR-A1- 2 826 094
- US-A1- 2007 261 922

## Description

La présente invention se rapporte au domaine de la lubrification de secours des boîtes de transmission, en particulier des boîtes de transmission de puissance destinées à un aéronef à voilure tournante, comme révélé dans FR2685758A, et correspondant au préambule de la revendication 1. La présente invention concerne un dispositif de lubrification de secours à architecture simplifiée pour un système mécanique. Ce dispositif de lubrification de secours est particulièrement adapté à la lubrification d'une boîte de transmission principale de puissance d'un aéronef à voilure tournante.

Un système mécanique comporte généralement des éléments tournants, tels que des arbres et des roulements, ainsi que des éléments de transmission de puissance et de réduction ou d'augmentation de vitesse, tels que des pignons et/ou des engrenages. Il est alors essentiel pour le bon fonctionnement du système mécanique de lubrifier et de refroidir ces éléments par exemple par de l'huile. Cette lubrification est en général assurée par un circuit de lubrification et a pour fonctions principales de limiter l'usure et l'échauffement de ces éléments du système mécanique et, par suite, de prolonger sa durée de vie. Sans une telle lubrification, le fonctionnement du système mécanique peut être rapidement dégradé, voire impossible.

Suite à cette lubrification du système mécanique, l'huile circulant dans le circuit de lubrification peut être parfois très chaude et alors refroidie dans un circuit de refroidissement généralement extérieur au système mécanique avant d'être de nouveau utilisable pour la lubrification du système mécanique. Ce circuit de refroidissement comporte un échangeur thermique, par exemple un échangeur thermique huile/air.

Ce circuit de refroidissement extérieur au système mécanique constitue une partie vulnérable d'un circuit de lubrification de ce système mécanique en ce qui concerne les fuites. En effet, ce circuit de refroidissement comporte des conduites, de nombreux raccords et l'échangeur thermique. Ce circuit de refroidissement est alors soumis à des contraintes thermiques, telles qu'une différence importante entre la température de l'huile et la température extérieure, et à des contraintes vibratoires générées par le système mécanique et/ou un véhicule utilisant ce système mécanique. De plus, ce circuit de refroidissement est agencé à l'extérieur du système mécanique. Notamment lorsque ce système mécanique équipe un aéronef, ce circuit de refroidissement est situé à l'extérieur du système mécanique de l'aéronef, par exemple sous un capot. Il peut cependant être ainsi exposé aux chocs avec des oiseaux ou bien avec de la glace par exemple. De fait, une ou plusieurs fuites peuvent apparaître au niveau de ces raccords et de ces conduites ainsi qu'au niveau de l'échangeur thermique, ces fuites étant essentiellement provoquées par ces contraintes vibratoires et thermiques.

De telles fuites permettent en général d'assurer tout de même une lubrification du système mécanique, mais pendant une durée limitée. En effet, l'huile stockée dans le circuit de lubrification, par exemple dans un réservoir, peut alors être évacuée entièrement à l'extérieur du circuit de lubrification par ces fuites. De telles fuites peuvent éventuellement être détectées par une baisse de la pression de l'huile dans le circuit de lubrification.

Par ailleurs, un circuit de lubrification comporte également un générateur de pression telle une pompe afin d'alimenter en huile le circuit de lubrification et de permettre ainsi sa circulation dans le circuit de lubrification. Lors d'une panne de ce générateur de pression, la circulation de l'huile est interrompue et, par suite, la lubrification du système mécanique est également interrompue immédiatement.

En cas de perte de cette lubrification, des dégradations peuvent donc apparaitre rapidement sur le fonctionnement du système mécanique. La conséquence de telles dégradations se produisant sur un système mécanique équipant un véhicule automobile par exemple est l'immobilisation du véhicule immédiatement ou bien après l'épuisement de l'huile du circuit de lubrification.

En revanche, si ce système mécanique constitue une boîte de transmission principale de puissance d'un aéronef à voilure tournante, de telles dégradations du circuit de lubrification de la boîte de transmission principale de puissance peuvent alors avoir des conséquences catastrophiques telles qu'un atterrissage d'urgence, voire un crash de l'aéronef.

Afin de pallier ces conséquences, un système mécanique peut comporter un circuit de lubrification de secours. Un tel circuit de lubrification de secours permet d'assurer, lorsque le circuit de lubrification principal est hors service, au moins une lubrification des organes essentiels du système mécanique afin d'assurer le fonctionnement de ce système mécanique. Par sécurité, il est préférable que l'aéronef fonctionne à un niveau de puissance réduit afin de limiter les sollicitations du système mécanique. Ce circuit de lubrification de secours permet alors, lorsque ce système mécanique est par exemple une boîte de transmission principale de puissance d'un aéronef, le fonctionnement du système mécanique et, par suite, celui de l'aéronef, afin d'atteindre un lieu d'atterrissage. Un tel circuit de lubrification de secours améliore ainsi la sécurité de l'aéronef.

Un circuit de lubrification de secours peut être mis en place en parallèle à un circuit de lubrification principal comme décrit dans le document US 8230835. Chaque circuit de lubrification comporte sa propre pompe, mais utilise le même réservoir d'huile. Cependant, si ce circuit de secours permet de lubrifier suffisamment un système mécanique en cas de panne du circuit principal, il est dans les faits rarement utilisé. De fait, ce circuit de secours constitue une masse embarquée qui est rarement fonctionnelle.

Le circuit de lubrification de secours peut également comporter un réservoir qui est indépendant du circuit de lubrification principal comme décrit dans le document FR 2826094. De plus, selon ce document FR 2826094, le système de lubrification comporte au moins une source de gaz sous pression pouvant permettre d'une part la mise sous pression du liquide de lubrification contenu dans le réservoir et d'autre part de pulvériser ce liquide de lubrification sous forme de brouillard.

En outre, les zones d'apparition des fuites du circuit de lubrification principal se situent fréquemment au niveau de l'échangeur thermique et de ses raccordements. De fait, afin d'éviter que de telles fuites apparaissent également sur le circuit de lubrification de secours, le circuit de secours ne comporte pas d'échangeur thermique. De la sorte, l'huile circulant grâce au circuit de secours n'est alors pas refroidie. En conséquence, le circuit de lubrification de secours ne peut être utilisé que pendant une durée limitée afin d'éviter que l'huile atteigne une température trop importante.

Ce circuit de secours est généralement mis en fonctionnement automatiquement suite une perte de pression détectée dans le circuit principal consécutive à une panne de la pompe de ce circuit principal ou bien à une fuite dans ce circuit principal. Ce circuit de lubrification de secours peut également être mis en marche manuellement par un opérateur.

Afin de réduire le risque qu'une défaillance du circuit de lubrification principal provienne du circuit de secours, le circuit de secours est généralement équipé d'un système « by-pass » dont le principe est de fermer la circulation dans les conduites du circuit de secours lorsqu'il y a une pression d'huile suffisante dans le circuit de lubrification principal. Ainsi, en cas de fuite sur le circuit de lubrification de secours, celui-ci n'est plus opérationnel, mais n'entrave pas le fonctionnement du circuit de lubrification principal.

L'inconvénient du système « by-pass » est qu'il laisse la possibilité d'une panne dormante sur le circuit de secours, cette panne n'étant détectée qu'au moment où le circuit de secours est mis en marche. Dans ce cas, il s'agit d'une anomalie majeure pouvant se révéler critique sur un aéronef à voilure tournante.

Pour certaines applications sur des aéronefs à voilure tournante, la boîte de transmission principale de puissance ne comporte pas de circuit de lubrification de secours proprement dit, mais deux circuits de lubrification identiques et indépendants. Chaque circuit de lubrification comporte sa propre pompe et son propre échangeur thermique. Cependant, les deux circuits de lubrification utilisent de façon commune le même réservoir d'huile formé par le carter de la boîte de transmission principale de puissance. De fait, en cas de fuite de l'un des circuits de lubrification, le fond de la boîte transmission principale de puissance va, dans un délai plus ou moins long, se vider et provoquer la défaillance du système de lubrification complet.

Certains systèmes de lubrification comportent un réservoir de secours, parfois directement monté à l'intérieur du système mécanique à lubrifier comme décrit dans les documents EP 2505878 et US 2007/0261922. Ce réservoir de secours est positionné au-dessus des organes essentiels à lubrifier et alimenté en permanence par le circuit de lubrification. L'huile s'écoule alors par gravité et en permanence depuis ce réservoir de secours sur ces organes essentiels. De fait, en cas de défaillance du circuit de lubrification, ce réservoir de secours n'est plus alimenté, mais permet d'assurer une lubrification de ces organes essentiels pendant un temps limité correspondant à l'épuisement de l'huile contenue dans ce réservoir de secours.

De plus, selon le document US 2007/0261922, un additif peut être ajouté à l'huile se trouvant dans ce réservoir de secours suite à la défaillance du circuit de lubrification principal. Cet additif permet d'augmenter les caractéristiques de l'huile améliorant ainsi son efficacité et la durée de fonctionnement du circuit de lubrification de secours formé par ce réservoir de secours.

En outre, le dispositif décrit dans le document FR 2685758 comporte également un réservoir de secours alimentant un circuit de distribution d'huile par l'intermédiaire d'une canalisation. Le réservoir de secours peut être pressurisé et l'ouverture d'une vanne permet la circulation de l'huile dans la canalisation. Ce réservoir de secours peut également être non pressurisé, une pompe alimentant alors la canalisation. Le réservoir de secours peut ainsi être positionné sans contrainte particulière vis-à-vis des organes essentiels à lubrifier. En cas de défaillance du circuit principal de lubrification, l'ouverture de la vanne ou bien le démarrage de la pompe est commandé manuellement ou automatiquement selon une valeur seuil de la pression ou de la température de l'huile. La lubrification de ces organes essentiels est assurée pendant un temps limité correspondant à l'épuisement de l'huile contenue dans ce réservoir de secours.

Par ailleurs, le document WO 2008/091341 décrit un dispositif de lubrification comportant un circuit externe permettant uniquement le refroidissement de l'huile et un circuit interne assurant la lubrification des éléments tournants du système mécanique. En cas de détection d'une fuite et d'une baisse du niveau de liquide de lubrification dans le carter, l'air à l'intérieur du carter est expulsé à l'extérieur du carter afin de créer une dépression à l'intérieur du carter et limiter ainsi le débit de cette fuite. Le circuit interne peut alors continuer de lubrifier ces éléments tournants durant un temps limité, tant que le carter contient du liquide de lubrification.

La présente invention a alors pour objet de proposer un dispositif de lubrification de secours d'un système mécanique permettant de s'affranchir des limitations mentionnées ci-dessus, permettant la lubrification des organes essentiels de ce système mécanique malgré la présence d'une défaillance sur le circuit de lubrification principal pendant une durée minimum limitée et garantie. La présente invention vise également à simplifier l'architecture de ce dispositif de lubrification de secours afin d'améliorer sa fiabilité tout en réduisant sa masse et son coût.

Selon l'invention, un dispositif de lubrification de secours à architecture simplifiée, destiné à la lubrification d'un système mécanique, est muni d'un réservoir, d'un moyen de déclenchement, d'au moins une conduite et d'au moins un moyen de distribution. Le réservoir contient un liquide de lubrification et le moyen de déclenchement permet une circulation du liquide de lubrification entre le réservoir et chaque moyen de distribution en cas de détection d'un dysfonctionnement d'un moyen de lubrification principale du système mécanique.

Ce système mécanique est par exemple une boîte de transmission principale de puissance d'un aéronef à voilure tournante.

Ce système mécanique comporte par exemple des éléments tournants et des éléments de transmission de puissance et de réduction ou d'augmentation de vitesse qui nécessitent d'être lubrifiés et refroidis par un liquide de lubrification tel que de l'huile afin que le système mécanique fonctionne efficacement et durablement. Dans ce but, le système mécanique comporte au moins un moyen de lubrification principale assurant la lubrification de ces éléments tournants et de ces éléments de transmission. Chaque moyen de lubrification principale peut comporter de façon connue un échangeur afin de refroidir le liquide de lubrification.

Par souci de simplification, on considère que le système mécanique comporte un seul moyen de lubrification principale. En cas de panne ou de dysfonctionnement de ce moyen de lubrification principale, le dispositif de lubrification de secours selon l'invention permet au moins une lubrification des organes essentiels du système mécanique afin d'assurer le fonctionnement de ce système mécanique pendant une durée minimum limitée, de l'ordre de trente minutes à deux heures. Chaque moyen de distribution est alors agencé à l'intérieur du système mécanique afin de lubrifier au moins ces organes essentiels.

Le moyen de déclenchement permet la mise en route du dispositif de lubrification de secours lorsqu'une panne ou bien un dysfonctionnement du moyen de lubrification principale est détectée. Cette panne et/ou ce dysfonctionnement peut être détecté de différences façons. Par exemple, une baisse de la pression du liquide de lubrification dans le moyen de lubrification principale ou bien une baisse du niveau du liquide de lubrification dans un réservoir de ce moyen de lubrification principale peut être détectée. Une augmentation de la température du système mécanique consécutive à l'arrêt de la lubrification de ce système mécanique peut également être détectée.

Le dispositif de lubrification de secours selon l'invention est remarquable en ce que le réservoir est agencé au-dessus des conduites et des moyens de distribution afin que le liquide de lubrification circule sous l'action de la gravité terrestre à partir du réservoir dans chaque conduite et chaque moyen de distribution. Ce dispositif de lubrification de secours est également remarquable en ce que chaque moyen de distribution comporte au moins un moyen de restriction, afin de limiter le débit du liquide de lubrification au niveau de chaque moyen de distribution, et est agencé à l'intérieur du système mécanique, chaque conduite alimentant chaque moyen de distribution étant également agencée au moins partiellement à l'intérieur du système mécanique. Le liquide de lubrification circulant dans chaque conduite et dans chaque moyen de distribution est ainsi chauffé par le système mécanique suite à un dysfonctionnement du moyen de lubrification principale du système mécanique et, par suite, la viscosité du liquide de lubrification diminue afin que le débit du liquide de lubrification au niveau de chaque moyen de distribution soit sensiblement égal ou supérieur à un débit minimal tant que le réservoir contient du liquide de lubrification.

Avantageusement, le réservoir positionné au-dessus des conduites et des moyens de distribution permet au dispositif de lubrification de secours selon l'invention de n'utiliser aucun générateur de pression. En effet, seule l'action de la gravité terrestre permet la circulation du liquide de lubrification du réservoir vers chaque conduite puis chaque moyen de distribution.

Un générateur de pression traditionnellement utilisé dans un dispositif de lubrification de secours principal ou bien de secours peut être une pompe ou bien l'utilisation d'un réservoir pressurisé.

L'absence d'un tel générateur de pression supprime avantageusement l'utilisation d'un composant mécanique pouvant être en dysfonctionnement ou en panne et supprime donc une cause potentielle de dysfonctionnement du dispositif de lubrification de secours. La fiabilité du dispositif de lubrification de secours selon l'invention se trouve ainsi améliorée. De plus, la masse du dispositif de lubrification de secours selon l'invention se trouve aussi réduite par cette absence d'un générateur de pression, de même que son coût.

De plus, chaque moyen de distribution comporte au moins un moyen de restriction. Un moyen de restriction est une réduction des dimensions de la section à travers laquelle circule le liquide de lubrification, permettant avantageusement de limiter le débit du liquide de lubrification circulant au niveau de chaque moyen de distribution.

Par exemple, un moyen de restriction est formé par un cône dont la section de sortie est un orifice d'un premier diamètre inférieur à un millimètre (1mm). Le moyen de distribution comportant ce moyen de restriction permet ainsi un faible débit du liquide de lubrification. Cette faible section de sortie combinée à la viscosité du liquide de lubrification permet typiquement d'avoir un débit du liquide lubrification sous la forme de gouttes à gouttes, la fréquence d'apparition de ces gouttes étant notamment fonction des dimensions de la section de sortie du moyen de restriction, de la hauteur de la colonne de liquide de lubrification située au-dessus de ce moyen de distribution et de la viscosité du liquide de lubrification.

De préférence, un moyen de distribution comporte un moyen de restriction et un filtre. Le filtre permet de filtrer le liquide de lubrification afin d'éviter de boucher ce moyen de restriction.

Un tel moyen de distribution remplace notamment un gicleur utilisé traditionnellement sur un moyen de lubrification principale ou de secours afin de répandre un liquide de lubrification pressurisé mécaniquement.

Chaque moyen de distribution du dispositif de lubrification de secours selon l'invention ne comporte avantageusement aucune pièce en mouvement ce qui limite grandement le risque de dysfonctionnement de ce dispositif de lubrification de secours et améliore ainsi sa fiabilité. De plus, un tel moyen de distribution a une masse égale voire inférieure à un gicleur qui est utilisé traditionnellement sur un moyen de lubrification principale ou de secours.

Chaque moyen de distribution du dispositif de lubrification de secours selon l'invention est agencé au-dessus des éléments tournants et de transmission du système mécanique et à proximité d'un organe essentiel de ce système mécanique afin de refroidir cet organe essentiel.

Le liquide de lubrification circule à partir du réservoir jusqu'aux moyens de distribution à travers les conduites du dispositif de lubrification de secours selon l'invention.

Le moyen de déclenchement permettant la mise en route du dispositif de lubrification de secours selon l'invention peut comporter plusieurs premières vannes. Ces premières vannes sont par exemple positionnées au niveau de chaque moyen de distribution. Un tel agencement des premières vannes présente l'avantage de lubrifier le système mécanique dès l'activation du moyen de déclenchement. En effet, les premières vannes étant positionnées au niveau de chaque moyen de distribution, les conduites à proximité de ces moyens de distribution sont remplies de liquide de lubrification circulant alors dans chaque moyen de distribution dès l'activation du moyen de déclenchement qui commande l'ouverture des premières vannes. Ainsi, le système mécanique est lubrifié dès la détection du dysfonctionnement du moyen de lubrification principale.

Par contre, le dispositif de lubrification de secours selon l'invention comporte alors plusieurs premières vannes qui augmentent d'une part la masse et d'autre part le coût de ce dispositif de lubrification de secours selon l'invention.

De préférence, le moyen de déclenchement de ce dispositif de lubrification de secours comporte une seule première vanne permettant de mettre en communication le réservoir et chaque conduite. Cette première vanne est par exemple agencée directement à la sortie du réservoir. Dans ce cas, dès l'activation du moyen de déclenchement, suite à la détection d'un dysfonctionnement du moyen de lubrification principale du système mécanique, le liquide remplit les conduites et atteint les moyens de distribution après un temps de démarrage. Ce temps de démarrage est toutefois faible et de l'ordre de quelques secondes. Ce temps de démarrage ne remet donc pas en cause l'efficacité du dispositif de lubrification de secours selon l'invention pour lubrifier et refroidir le système mécanique. Ce moyen de déclenchement comportant une seule première vanne permet ainsi avantageusement de minimiser la masse et le coût du dispositif de lubrification de secours selon l'invention.

Le moyen de déclenchement peut également comporter une seconde vanne permettant une mise à l'air du réservoir. Cette seconde vanne est nécessaire lorsque le réservoir est fermé et étanche pour permettre la sortie du liquide de lubrification du réservoir et l'entrée de l'air dans le réservoir.

Chaque première vanne et chaque seconde vanne du moyen de déclenchement peuvent être des vannes réversibles permettant à plusieurs reprises leur ouverture et leur fermeture. Une telle vanne réversible présente l'avantage de permettre d'arrêter l'alimentation des moyens de distribution et la lubrification du système mécanique après la détection d'un dysfonctionnement du moyen de lubrification principale et l'activation du moyen de déclenchement. Cet arrêt de l'alimentation des moyens de distribution permet de de stopper l'écoulement du liquide de lubrification encore présent dans le réservoir par exemple lorsque le système mécanique a été arrêté ou bien lorsque le dysfonctionnement du moyen de lubrification principale a disparu.

De préférence, chaque première vanne et chaque seconde vanne sont des vannes utilisables une seule fois. Une telle vanne utilisable une seule fois présente l'avantage d'être extrêmement fiable, notamment vis-à-vis d'une vanne réversible. De plus, la quantité de liquide de lubrification dans le réservoir est limitée pour permettre la lubrification et le refroidissement du système mécanique pendant une durée limitée. En conséquence, le dispositif de lubrification de secours selon l'invention privilégie la fiabilité vis-à-vis de la perte d'une quantité limitée de liquide de lubrification. De plus, le non fonctionnement d'un dispositif de lubrification de secours suite à une défaillance d'une vanne peut être dramatique dans le cas où le système mécanique est par exemple une boîte de transmission principale de puissance d'un aéronef à voilure tournante et que le dysfonctionnement du moyen de lubrification principale apparait au cours d'un vol de l'aéronef.

En outre, lorsque le moyen de déclenchement comporte une seule première vanne, cette première vanne et la seconde vanne peuvent être regroupées en un seul composant permettant avantageusement d'avoir un seul moyen de commande actionnant l'ouverture de ces deux vannes.

Le moyen de déclenchement est de préférence à commande pyrotechnique pour commander l'ouverture de la première vanne et celle de la seconde vanne et permettre ainsi l'écoulement du liquide de lubrification du réservoir vers les moyens de distribution via les conduites. Une telle commande pyrotechnique présente les avantages d'être extrêmement fiable, légère et d'avoir un coût de maintenance très faible. En effet, le fonctionnement d'une commande pyrotechnique est généralement garanti pour une durée de vie comprise entre 10 et 20 ans.

Le déclenchement de cette commande pyrotechnique peut être électrique ou bien thermique. Un déclenchement électrique de la commande pyrotechnique est obtenu par exemple de façon connue par l'intermédiaire d'un moyen de détection d'un dysfonctionnement du moyen de lubrification principale du système mécanique.

Un déclenchement thermique de la commande pyrotechnique est obtenu avantageusement suite à l'augmentation de la température du système mécanique. Le moyen de déclenchement et le réservoir se trouvent alors dans le système mécanique. En cas de dysfonctionnement du moyen de lubrification principale, la température du système mécanique va augmenter suite à l'arrêt de la lubrification et du refroidissement par le moyen de lubrification principale. Dès que la température du moyen de déclenchement situé à l'intérieur du système mécanique atteint un seuil prédéterminé, la commande pyrotechnique est déclenchée, permettant l'écoulement du liquide de lubrification du réservoir vers les moyens de distribution via les conduites. La valeur de ce seuil prédéterminé peut par exemple être de l'ordre de 150°C.

Un tel déclenchement thermique de la commande pyrotechnique évite avantageusement l'utilisation d'un moyen de détection d'un dysfonctionnement du moyen de lubrification principale qui peut être sujet à des dysfonctionnements et améliore ainsi la fiabilité du dispositif de lubrification de secours selon l'invention.

Le moyen de déclenchement peut également être à commande totalement électrique pour commander l'ouverture de la première vanne et l'ouverture de la seconde vanne par l'intermédiaire d'un moyen de détection d'un dysfonctionnement du moyen de lubrification principale du système mécanique.

Par ailleurs, chaque moyen de distribution est agencé à l'intérieur du système mécanique et chaque conduite alimentant chaque moyen de distribution est agencée au moins partiellement à l'intérieur de ce système mécanique.

La température du système mécanique va augmenter suite à un dysfonctionnement du moyen de lubrification principale et à l'arrêt de la lubrification et du refroidissement par ce moyen de lubrification principale.

Cette température augmente en effet d'une part suite au temps de démarrage du dispositif de lubrification de secours entre l'arrêt du moyen de lubrification principale et l'instant où le dispositif de lubrification de secours lubrifie les organes essentiels du système mécanique et d'autre part du fait que la lubrification et le refroidissement réalisés par le dispositif de lubrification de secours sont moins efficaces que ceux réalisés par le moyen de lubrification principale. Le dispositif de lubrification de secours ne lubrifie généralement pas tous les éléments tournants et de transmission du système mécanique, mais uniquement les organes essentiels et le débit du liquide de lubrification est plus faible pour un dispositif de lubrification de secours vis-à-vis d'un moyen de lubrification principale.

La température du système mécanique augmente par exemple depuis une température nominale de l'ordre de 80°C jusqu'à une température maximale de l'ordre de 150°C pour certaines zones du système mécanique.

Ainsi, suite à un dysfonctionnement du moyen de lubrification principale du système mécanique et à l'activation du moyen de déclenchement du dispositif de lubrification de secours, du liquide de lubrification circule dans chaque conduite et dans chaque moyen de distribution. Ce liquide de lubrification est alors chauffé progressivement par le système mécanique et, par suite, la viscosité du liquide de lubrification diminue progressivement.

Parallèlement, à la lubrification des organes essentiels du système mécanique, le réservoir se vide progressivement du liquide de lubrification qu'il contient. Par ailleurs, le liquide de lubrification s'écoule par l'action de la gravité terrestre. En conséquence, le débit du liquide de lubrification sortant d'un moyen de distribution est fonction notamment de la hauteur de la colonne de liquide de lubrification située au-dessus de ce moyen de distribution et de la viscosité du liquide de lubrification.

Avantageusement, la baisse de la viscosité du liquide de lubrification, ayant pour effet une augmentation du débit de ce liquide de lubrification, permet de compenser au minimum la baisse de la hauteur de la colonne de liquide de lubrification, qui entraîne une baisse de ce débit. De la sorte, le débit du liquide de lubrification au niveau de chaque moyen de distribution est sensiblement constant ou bien augmente progressivement au cours du fonctionnement du dispositif de lubrification de secours tant que le réservoir contient du liquide de lubrification.

Ainsi, ce débit du liquide de lubrification au niveau de chaque moyen de distribution est sensiblement égal ou supérieur à un débit minimal tant que le réservoir contient du liquide de lubrification. Pour un moyen de distribution, le débit minimal est égal au débit du liquide de lubrification au niveau de ce moyen de distribution au démarrage du dispositif de lubrification de secours.

Pour l'ensemble du dispositif de lubrification de secours, le débit minimal est égal au débit du liquide de lubrification le plus faible au niveau des moyens de distribution au démarrage du dispositif de lubrification de secours. La température environnante et le premier diamètre du moyen de restriction ont notamment une influence sur le débit du moyen de distribution. Ce débit minimal est par exemple de l'ordre de 0.2 litre par heure (0.2l/h).

Afin de favoriser cette baisse de la viscosité du liquide de lubrification, les moyens de distribution sont placés de préférence dans une zone du système mécanique qui subit une augmentation de température significative lors de l'utilisation du dispositif de lubrification de secours. Avantageusement, les moyens de distribution étant agencés au-dessus des éléments tournants et de transmission du système mécanique et à proximité d'un organe essentiel. En effet, suite à la panne du moyen de lubrification principale, cet organe essentiel n'est pas lubrifié ou bien lubrifié de façon insuffisante, chauffe et réchauffe alors par conduction thermique le moyen de distribution et en particulier le moyen de restriction qu'il comporte. Le liquide de lubrification contenu par le moyen de restriction et le moyen de distribution est alors chauffé et sa viscosité diminue. Le débit de ce liquide de lubrification est de fait augmenté et ce liquide de lubrification s'écoule sur une zone à proximité de cet organe essentiel. De la sorte, le dispositif de lubrification de secours selon l'invention permet de lubrifier et de refroidir cette zone et, par conduction thermique également cet organe essentiel afin de limiter voire éviter la dégradation de cet organe essentiel.

Par ailleurs, les moyens de distribution peuvent être agencés au-dessus et à l'aplomb d'un organe essentiel afin que le liquide de lubrification s'écoule directement sur cet organe essentiel et, ainsi, refroidisse et lubrifie cet organe essentiel.

En outre, afin de contribuer à ce que le débit du liquide de lubrification soit sensiblement égal ou supérieur au débit minimal, il est préférable que les conduites du dispositif de lubrification de secours aient des dimensions permettant d'une part de limiter les pertes de charge du liquide de lubrification circulant dans ces conduites et d'autre part de favoriser l'augmentation de la température du liquide de lubrification et, par suite, la baisse de sa viscosité. Cette limitation des pertes de charge du liquide de lubrification est principalement nécessaire lorsque le liquide de lubrification est encore à une viscosité importante, c'est-à-dire dans les premiers instants de l'utilisation du dispositif de lubrification de secours. En effet, les pertes de charge diminuent ensuite lorsque la viscosité du liquide de lubrification diminue.

De la sorte, chaque conduite a un second diamètre intérieur supérieur ou égal à une première valeur minimale afin de permettre un échauffement suffisant du liquide de lubrification. Par exemple, la première valeur minimale est comprise entre 6 mm et 10 mm.

Par ailleurs, le dispositif de lubrification de secours selon l'invention comporte de préférence une seule première vanne située en sortie du réservoir. De fait, les conduites et les moyens de distribution ne contiennent pas de liquide de lubrification tant qu'aucun dysfonctionnement du moyen de lubrification principale n'est détecté et que le moyen de déclenchement n'est pas activé. Par suite, aucun risque de cokéfaction du liquide de lubrification dans les conduites et les moyens de distribution n'existe tant que le dispositif de lubrification de secours selon l'invention ne fonctionne pas.

Ensuite, lorsque le dispositif de lubrification de secours fonctionne et le liquide de lubrification circulant dans les conduites et les moyens de distribution, la section des moyens de restriction ne doivent pas être trop faibles afin de ne pas générer un échauffement local important du liquide de lubrification. En effet, si un tel échauffement local important du liquide de lubrification se produisait, une cokéfaction du liquide de lubrification pourrait apparaitre localement au niveau d'un moyen de restriction, entrainer le colmatage de ce moyen de restriction et, par suite, un dysfonctionnement du dispositif de lubrification de secours selon l'invention.

De la sorte, chaque moyen de restriction comporte un orifice dont le premier diamètre est supérieur ou égal à une seconde valeur minimale. Par exemple, la seconde valeur minimale est comprise entre 0.3 mm et 1.0 mm.

En outre, tant que le liquide de lubrification circule dans les conduites et les moyens de distribution, le risque d'apparition de cokéfaction du liquide de lubrification est également réduit, le liquide de lubrification étant en mouvement.

Ainsi, la combinaison de sections adaptées, des moyens de restriction et de l'absence de liquide de lubrification dans les conduites et les moyens de distribution, tant que le moyen de déclenchement n'est pas activé, contribue à limiter le risque d'apparition de cokéfaction du liquide de lubrification.

Il convient toutefois de ne pas positionner les moyens de distribution dans une zone du système mécanique où la température est excessive afin de limiter le risque d'apparition de cokéfaction du liquide de lubrification.

Toutefois, cette température excessive dépend des caractéristiques du liquide de lubrification utilisé. Cette température excessive est par exemple de l'ordre de 200°C, voire supérieure si le liquide de lubrification utilisé est une huile à hautes performances.

De plus, le réservoir peut également être agencé à l'intérieur du système mécanique. De fait, la totalité des conduites est également agencée à l'intérieur du système mécanique. Par suite, la totalité du liquide de lubrification du dispositif de lubrification de secours selon l'invention est soumis à l'augmentation de température du système mécanique suite à un dysfonctionnement du moyen de lubrification principale.

Par ailleurs la position et la forme du réservoir ainsi que la position des moyens de distribution peuvent avoir une influence sur le débit du liquide de lubrification au niveau de chaque moyen de distribution et sur l'évolution de ce débit.

La valeur de ce débit est notamment dépendante de la hauteur de la colonne de liquide de lubrification située au-dessus de chaque moyen de distribution. Cette colonne de liquide de lubrification est formée par la somme de la hauteur *H1* du liquide de lubrification dans le réservoir et de la distance *H21,H22* entre le réservoir et chaque moyen de distribution, la hauteur *H1* et la distance *H21,H22* étant définies selon la direction de la pesanteur.

De fait, selon la forme du réservoir, la baisse de la hauteur *H1* de liquide de lubrification va être plus ou moins rapide. En conséquence, l'évolution du débit au niveau de chaque moyen de distribution pourra également être plus ou moins rapide. Notamment, pour un volume de liquide de lubrification donné, plus la hauteur *H1* avant l'activation du moyen de déclenchement est faible, plus la baisse de cette hauteur *H1* sera lente lors de la lubrification du système mécanique par le dispositif de lubrification de secours.

Toutefois, la forme de ce réservoir peut être imposée par l'espace disponible par le système mécanique lorsque le réservoir est agencé dans le système mécanique.

En outre, la hauteur *H1* diminue lors du fonctionnement du dispositif de lubrification de secours alors que la distance *H21,H22* est constante. De fait, cette distance *H21,H22* est une valeur dimensionnante pour obtenir un débit au niveau de chaque moyen de distribution qui ne varie que faiblement quelle que soit la hauteur *H1.* De fait, la hauteur *H1* du liquide de lubrification dans le réservoir est de préférence inférieure à la distance *H21,H22* entre le réservoir et chaque moyen de distribution. L'influence de la variation de la hauteur *H1* sur le débit du liquide de lubrification au niveau de chaque moyen de distribution est donc réduite.

De plus, comme évoqué précédemment, la viscosité du liquide de lubrification diminue au cours du fonctionnement du dispositif de lubrification de secours ce qui, combiné à l'influence réduite de la variation de la hauteur *H1* sur le débit du liquide de lubrification au niveau de chaque moyen de distribution, contribue à ce que ce débit au niveau de chaque moyen de distribution soit sensiblement égal au débit minimal, voire supérieur à ce débit minimal.

Il peut d'ailleurs être intéressant que le débit du liquide de lubrification augmente au cours du fonctionnement du dispositif de lubrification de secours. En effet, ce dispositif de lubrification de secours a une efficacité inférieure au moyen de lubrification principale. De fait, la température du système mécanique peut continuer à augmenter au cours du fonctionnement du dispositif de lubrification de secours.

Ainsi, l'augmentation de ce débit au cours du fonctionnement du dispositif de lubrification de secours permet l'augmentation de la lubrification du système mécanique parallèlement à l'augmentation de la température de ce système mécanique.

En conséquence, la hauteur *H1* et la distance *H21,H22* sont de préférence définies initialement afin que la diminution de la hauteur *H1,* lorsque le dispositif de lubrification de secours lubrifie le système mécanique, et la diminution de la viscosité du liquide de lubrification permettent d'avoir un débit du liquide de lubrification au niveau de chaque moyen de distribution et tout au long du fonctionnement de ce dispositif de lubrification de secours sensiblement égal au débit minimal, voire supérieur à ce débit minimal.

Le dispositif de lubrification de secours selon l'invention permet donc de fournir un débit de liquide de lubrification au minimum sensiblement constant, voire croissant, ce débit étant assuré par la hauteur de la colonne de liquide de lubrification, en utilisant l'augmentation de la température du système mécanique suite à la défaillance du moyen de lubrification principale pour améliorer l'efficacité de ce dispositif de lubrification de secours.

Ce dispositif de lubrification de secours selon l'invention présente ainsi l'avantage d'une grande fiabilité, l'architecture de ce dispositif de lubrification de secours étant simplifiée en supprimant notamment l'utilisation de gicleurs, d'une pompe ou d'un réservoir pressurisé qui étaient souvent à l'origine de pannes dormantes sur de tels dispositifs de lubrification de secours utilisés traditionnellement. Le seul dispositif mécanique du dispositif de lubrification de secours selon l'invention est le moyen de déclenchement qui est de préférence un élément utilisable une seule fois afin de garantir sa fiabilité.

Cette grande fiabilité est essentielle pour un dispositif de lubrification de secours qui doit absolument assurer cette fonction afin de permettre la lubrification des organes essentiels du système mécanique suite à un arrêt de la lubrification principale.

De plus, cette architecture simplifiée du dispositif de lubrification de secours selon l'invention permet également de limiter la masse et le coût de ce dispositif de lubrification de secours.

Cette limitation de la masse de ce dispositif de lubrification de secours est importante pour cette fonction qui est, de façon générale, très rarement utilisée pendant la durée de vie du système mécanique, afin de ne pas pénaliser notamment les performances de l'aéronef lorsque ce système mécanique équipe un aéronef.

La présente invention a aussi pour objet une boîte de transmission principale de puissance destinée à un aéronef à voilure tournante. Cette boîte de transmission principale de puissance est munie d'un dispositif de lubrification de secours comme précédemment décrit.

L'invention et ses avantages apparaîtront avec plus de détails dans le cadre de la description qui suit avec des exemples donnés à titre illustratif en référence aux figures annexées qui représentent :
- la figure 1 un système mécanique comportant un dispositif de lubrification de secours selon l'invention, et
- la figure 2, une vue en coupe d'un moyen de distribution du dispositif de lubrification de secours.

Les éléments présents dans plusieurs figures distinctes sont affectés d'une seule et même référence.

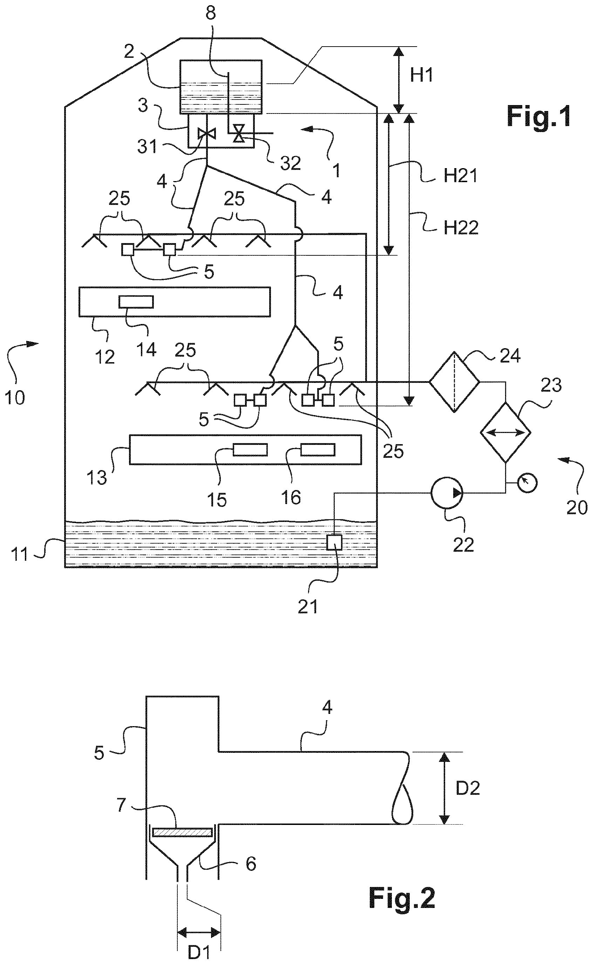

Un système mécanique 10 comportant un moyen de lubrification principale 20 et un dispositif de lubrification de secours 1 est représenté sur la figure 1. Ce système mécanique 10 comporte notamment des éléments tournants 12, tels que des arbres et des roulements, ainsi que des éléments de transmission 13 de puissance et de réduction ou d'augmentation de vitesse, tels que des pignons et/ou des engrenages. Ce système mécanique 10 est par exemple une boîte de transmission principale de puissance équipant un aéronef à voilure tournante.

Le moyen de lubrification principale 20 et le dispositif de lubrification de secours 1 ont pour fonction de lubrifier et de refroidir tout ou partie des éléments mécaniques 12,13 de ce système mécanique 10.

Le moyen de lubrification principale 20 comporte un point d'aspiration 21, une pompe 22, un échangeur thermique 23, un filtre 24 et des gicleurs 25. Les gicleurs 25 sont positionnés au-dessus des éléments tournants 12 et des éléments de transmission 13. La pompe 22 permet d'aspirer un liquide de lubrification, tel que de l'huile, situé dans un carter 11 du système mécanique 10 et de le pulvériser grâce aux gicleurs 25 sur les éléments mécaniques 12,13. Le moyen de lubrification principale 20 permet ainsi de lubrifier et de refroidir ces éléments mécaniques 12,13.

Le dispositif de lubrification de secours 1 comporte un réservoir 2 contenant un liquide de lubrification, un moyen de déclenchement 3, des conduites 4 et des moyens de distribution 5. Le dispositif de lubrification de secours 1 est entièrement agencé à l'intérieur du système mécanique 10 et le réservoir 2 est positionné au-dessus des conduites 4 et des moyens de distribution 5. Le moyen de déclenchement 3 est situé en sortie du réservoir 2 et comporte deux vannes 31,32. Deux moyens de distribution 5 sont positionnés au-dessus de premiers organes essentiels 14 parmi les éléments tournants 12 et deux moyens de distribution 5 sont positionnés respectivement au-dessus de seconds organes essentiels 15,16 parmi les éléments de transmission 13.

Le moyen de déclenchement 3 permet une circulation du liquide de lubrification entre ledit réservoir 2 et chaque moyen de distribution 5 en cas de détection d'un dysfonctionnement du moyen de lubrification principale 20. Dans ce but, le moyen de déclenchement 3 comporte une première vanne 31 agencée entre le réservoir 2 et une première conduite 4 et une seconde vanne 32 agencée sur une canalisation 8. La canalisation 8 permet de relier l'intérieur du réservoir 2 à l'extérieur de ce réservoir 2.

Ainsi, l'ouverture de la seconde vanne 32 assure une mise à l'air du réservoir 2. Cette mise à l'air du réservoir 2 est indispensable pour permettre l'écoulement du liquide de lubrification vers la première conduite 4 lorsque la première vanne 31 est ouverte, le réservoir 2 étant fermé et étanche. Un réservoir 2 fermé et étanche évite l'intrusion dans ce réservoir 2 de corps étrangers et de poussières. Un réservoir 2 fermé et étanche est également utile lorsque le système mécanique 10 équipe un aéronef. En effet, l'assiette d'un aéronef peut varier lors d'un vol et notamment lors de virages. Le liquide de lubrification pourrait alors sortir du réservoir 2 s'il comportait une ou plusieurs ouvertures permettant la mise à l'air permanente du réservoir 2.

L'ouverture de la première vanne 31 permet l'écoulement du liquide de lubrification depuis le réservoir 2 dans la première conduite 4, puis jusqu'à chaque moyen de distribution 5 par l'intermédiaire des autres conduites 4. Cet écoulement du liquide de lubrification est réalisé uniquement par l'action de la gravité terrestre, le réservoir 2 étant non pressurisé et situé au-dessus des conduites 4 et des moyens de distribution 5.

La première et la seconde vanne 31,32 sont des vannes utilisables une seule fois. De telles vannes 31,32 utilisables une seule fois présentent les avantages d'une part d'être extrêmement fiables et d'autres part d'avoir une durée de vie importante sans opération de maintenance particulière.

L'ouverture de cette première et de cette seconde vanne 31,32 est déclenchée simultanément par l'activation du moyen de déclenchement 3 dès qu'un dysfonctionnement du moyen de lubrification principale 20 est détecté. Cette ouverture des première et seconde vannes 31,32 permet l'écoulement du liquide de lubrification du réservoir 2 vers les moyens de distribution 5 via les conduites 4.

L'activation du moyen de déclenchement 3 est à commande pyrotechnique, cette commande pyrotechnique étant déclenchée de façon thermique. Ainsi, ce moyen de déclenchement 3 est activé dès que la température ambiante de ce moyen de déclanchement 3 atteint un seuil prédéterminé. Le dispositif de lubrification de secours 1 étant entièrement agencé à l'intérieur du système mécanique 10, la température ambiante du moyen de déclenchement 3 est sensiblement égale à la température du système mécanique 10. De plus, suite à un dysfonctionnement du moyen de lubrification principale 20, la lubrification et le refroidissement des éléments mécaniques 12,13 sont dégradés ou bien arrêtés. Par suite, la température du système mécanique 10 augmente suite à la dégradation ou à l'arrêt de cette lubrification et de ce refroidissement des éléments mécaniques 12,13.

De la sorte, le moyen de déclenchement 3 est activé dès que la température du système mécanique à proximité du moyen de déclenchement 3 atteint un seuil prédéterminé, qui caractérise alors un dysfonctionnement du moyen de lubrification principale 20.

Le déclenchement de la commande pyrotechnique du moyen de déclenchement 3 peut également être électrique. Ce déclenchement électrique de la commande pyrotechnique est obtenu par l'intermédiaire d'un moyen de détection (non représenté) d'un dysfonctionnement du moyen de lubrification principale 20. Ce moyen de détection permet de détecter par exemple une baisse de la pression du liquide de lubrification dans le moyen de lubrification principale 20 ou bien une baisse du niveau du liquide de lubrification dans le carter 11 du système mécanique 10.

Par ailleurs, le moyen de déclenchement 3 peut également être à commande totalement électrique et utilise alors également un tel moyen de détection d'un dysfonctionnement du moyen de lubrification principale 20.

Une vue en coupe d'un moyen de distribution 5 est représentée sur la figure 2. Ce moyen de distribution 5 comporte un moyen de restriction 6 et un filtre 7. Un moyen de restriction est une réduction des dimensions de la section à travers laquelle circule le liquide de lubrification, permettant avantageusement de limiter le débit du liquide de lubrification circulant au niveau de chaque moyen de distribution 5.

Le moyen de restriction 6 est formé par un cône dont la section de sortie est un orifice d'un premier diamètre D1 faible. Ce moyen de restriction 6 permet de réduire le débit du liquide de lubrification sortant du moyen de distribution 5. Le filtre 7 permet de filtrer le liquide de lubrification entrant dans le moyen de distribution 5 par la conduite 4 afin notamment d'éviter de boucher le moyen de restriction 6. Ce faible premier diamètre D1 permet typiquement d'avoir un débit du liquide de lubrification sous la forme de gouttes à gouttes en sortie de chaque moyen de distribution 5.

De plus, le premier diamètre D1 est supérieur ou égal à une seconde valeur minimale afin de ne pas générer un échauffement local important du liquide de lubrification et, par suite, une cokéfaction du liquide de lubrification. La seconde valeur minimale est par exemple comprise entre 0.3 mm et 1.0 mm.

Par ailleurs, le dispositif de lubrification de secours 1 étant entièrement agencé à l'intérieur du système mécanique 10, le liquide de lubrification se trouvant dans le réservoir 2 et le liquide de lubrification circulant dans les conduites 4 et les moyens de distribution 5 sont soumis à la température croissante du système mécanique 10. Ce liquide de lubrification est alors chauffé progressivement et sa viscosité diminue aussi progressivement.

En outre, la lubrification des organes essentiels 14,15,16 entraîne une baisse progressive du niveau du liquide de lubrification dans le réservoir 2. En conséquence, la baisse de la hauteur de la colonne de liquide de lubrification située au-dessus de chaque moyen de distribution 5 a également tendance à réduire la valeur du débit du liquide de lubrification sortant de chaque moyen de distribution 5.

Avantageusement, la baisse de la viscosité du liquide de lubrification suite à l'augmentation de la température du système mécanique 10 permet de compenser cette baisse de la hauteur de la colonne de liquide de lubrification et contribue à conserver au minimum un débit du liquide de lubrification sensiblement constant, voire croissant.

De plus, on peut voir sur la figure 1 que la hauteur *H1* du liquide de lubrification dans le réservoir 2 est nettement inférieure aux distances *H21,H22* entre le réservoir 2 et les différents moyens de distribution 5, la hauteur *H1* et la distance *H21,H22* étant définies selon la direction de la pesanteur. De fait, la baisse de la hauteur *H1* du liquide de lubrification dans le réservoir 2 ne provoque qu'une très faible baisse de la hauteur de la colonne de liquide de lubrification située au-dessus de chaque moyen de distribution 5.

En conséquence, le débit du liquide de lubrification au niveau de chaque moyen de distribution 5 est sensiblement égal ou supérieur à un débit minimal au cours du fonctionnement du dispositif de lubrification de secours 1 tant que le réservoir 2 contient du liquide de lubrification. Pour chaque moyen de distribution 5, ce débit minimal est égal au débit du liquide de lubrification au niveau de ce moyen de distribution 5 au démarrage du dispositif de lubrification de secours 1. Ce débit minimal est par exemple égal à 0.2 l/h.

Par ailleurs, afin de limiter les perturbations pouvant limiter le débit du liquide de lubrification, les conduites 4 ont des dimensions permettant d'une part de limiter les pertes de charge du liquide de lubrification circulant dans ces conduites 4 et d'autre part de favoriser l'augmentation de la température du liquide de lubrification et, par suite, la baisse de sa viscosité. Chaque conduite 4 a ainsi un second diamètre intérieur D2 supérieur ou égal à une première valeur minimale, par exemple, comprise entre 6 mm et 10 mm.

Ce dispositif de lubrification de secours 1 dispose donc d'une architecture simplifiée, sans l'utilisation de pompe, de gicleurs ni d'un réservoir pressurisé, ainsi qu'une masse et un coût réduit. Cette masse réduite est importante pour cette fonction très rarement utilisée pendant la durée de vie du système mécanique 10, mais pourtant indispensable au système mécanique 10 en cas d'un dysfonctionnement du moyen de lubrification principale 20. De plus, cette architecture simplifiée assure une fiabilité importante à ce dispositif de lubrification de secours 1.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention.

## Revendications

1. Dispositif de lubrification de secours (1) à architecture simplifiée d'un système mécanique (10), ledit dispositif de lubrification de secours (1) étant muni d'un réservoir (2), d'un moyen de déclenchement (3), d'au moins une conduite (4) et d'au moins un moyen de distribution (5), ledit réservoir (2) contenant un liquide de lubrification et ledit moyen de déclenchement (3) permettant une circulation dudit liquide de lubrification entre ledit réservoir (2) et chaque moyen de distribution (5) en cas de détection d'un dysfonctionnement du moyen de lubrification principale (20) dudit système mécanique (10),
**caractérisé en ce que** ledit réservoir (2) est agencé au-dessus desdites conduites (4) et desdits moyens de distribution (5) afin que ledit liquide de lubrification circule sous l'action de la gravité terrestre à partir dudit réservoir (2) dans chaque conduite (4) et chaque moyen de distribution (5), chaque moyen de distribution (5) comportant au moins un moyen de restriction (6) afin de limiter le débit dudit liquide de lubrification au niveau de chaque moyen de distribution (5) et étant agencé à l'intérieur dudit système mécanique (10), chaque conduite (4) alimentant chaque moyen de distribution (5) étant agencée au moins partiellement à l'intérieur dudit système mécanique (10), ledit liquide de lubrification circulant dans chaque conduite (4) et dans chaque moyen de distribution (5) étant ainsi chauffé par ledit système mécanique (10) et la viscosité dudit liquide de lubrification diminuant suite à un dysfonctionnement dudit moyen de lubrification principale (20) afin qu'un débit dudit liquide de lubrification au niveau de chaque moyen de distribution (5) soit sensiblement égal ou supérieur à un débit minimal tant que ledit réservoir contient dudit liquide de lubrification.

2. Dispositif de lubrification de secours (1) selon la revendication 1,
**caractérisé en ce que** ledit réservoir (2) est agencé à l'intérieur dudit système mécanique (10).

3. Dispositif de lubrification de secours (1) selon l'une quelconque des revendications 1 à 2,
**caractérisé en ce que** la hauteur *H1* dudit liquide de lubrification dans ledit réservoir (2) est inférieure à la distance *H21,H22* entre ledit réservoir (2) et chaque moyen de distribution (5), ladite hauteur *H1* et ladite distance *H21,H22* étant définies selon la direction de la pesanteur.

4. Dispositif de lubrification de secours (1) selon la revendication 3,
**caractérisé en ce que** ladite hauteur *H1* et ladite distance *H21,H22* sont définies initialement afin que la diminution de ladite hauteur *H1,* lorsque ledit dispositif de lubrification de secours (1) lubrifie ledit système mécanique (10), et ladite diminution de ladite viscosité dudit liquide de lubrification permettent d'avoir ledit débit dudit liquide de lubrification au niveau de chaque moyen de distribution (5) sensiblement égal ou supérieur audit débit minimal tant que ledit réservoir contient dudit liquide de lubrification.

5. Dispositif de lubrification de secours (1) selon l'une quelconque des revendications 1 à 4,
**caractérisé en ce que** ledit moyen de déclenchement (3) comporte une première vanne (31) permettant de mettre en communication ledit réservoir (2) et chaque conduite (4).

6. Dispositif de lubrification de secours (1) selon l'une quelconque des revendications 1 à 4,
**caractérisé en ce que** ledit moyen de déclenchement (3) comporte plusieurs premières vannes (31) positionnées au niveau de chaque moyen de distribution (5).

7. Dispositif de lubrification de secours (1) selon l'une quelconque des revendications 1 à 6,
**caractérisé en ce que** ledit moyen de déclenchement (3) comporte une seconde vanne (32) permettant une mise à l'air dudit réservoir (2), ledit réservoir (2) étant fermé et étanche.

8. Dispositif de lubrification de secours (1) selon l'une quelconque des revendications 1 à 7,
**caractérisé en ce que** chaque moyen de restriction (6) comporte un orifice dont le premier diamètre est supérieur ou égal à une seconde valeur minimale afin d'éviter une cokéfaction dudit liquide de lubrification.

9. Dispositif de lubrification de secours (1) selon la revendication 8,
**caractérisé en ce que** ladite seconde valeur minimale est comprise entre 0.3 mm et 1.0 mm.

10. Dispositif de lubrification de secours (1) selon l'une quelconque des revendications 1 à 9,
**caractérisé en ce que** chaque conduite (4) a un second diamètre supérieur ou égal à une première valeur minimale afin de permettre un échauffement suffisant dudit liquide de lubrification.

11. Dispositif de lubrification de secours (1) selon la revendication 10,
**caractérisé en ce que** ladite première valeur minimale est comprise entre 6 mm et 10 mm.

12. Dispositif de lubrification de secours (1) selon l'une quelconque des revendications 1 à 11,
**caractérisé en ce que** ledit débit minimal est égal au débit dudit liquide de lubrification le plus faible au niveau de chaque moyen de distribution (5) au démarrage dudit dispositif de lubrification de secours (1).

13. Dispositif de lubrification de secours (1) selon l'une quelconque des revendications 1 à 12,
**caractérisé en ce que** ledit moyen de déclenchement (3) est à commande électrique.

14. Dispositif de lubrification de secours (1) selon l'une quelconque des revendications 1 à 12,
**caractérisé en ce que** ledit moyen de déclenchement (3) est à commande pyrotechnique.

15. Dispositif de lubrification de secours (1) selon la revendication 14,
**caractérisé en ce que**, ledit moyen de déclenchement (3) et ledit réservoir (2) se trouvant dans ledit système mécanique (10), ladite commande pyrotechnique est à déclenchement thermique obtenu dès que la température dudit moyen de déclenchement (3) atteint un seuil prédéterminé.

16. Boîte de transmission principale de puissance destinée à un aéronef à voilure tournante,
**caractérisée en ce que** ladite boîte de transmission principale de puissance est munie d'un dispositif de lubrification de secours (1) selon l'une quelconque des revendications 1 à 15, ledit système mécanique (10) étant ladite boîte de transmission principale de puissance.

## Patentansprüche

1. Notschmiervorrichtung (1) eines mechanischen Systems (10) mit vereinfachtem Aufbau, wobei die Notschmiervorrichtung (1) mit einem Tank (2), einem Auslösemittel (3), mindestens einer Leitung (4) und mindestens einem Verteilermittel (5) versehen ist, wobei der Tank (2) eine Schmierflüssigkeit enthält und das Auslösemittel (3) ein Fließen der Schmierflüssigkeit zwischen dem Tank (2) und jedem Verteilermittel (5) erlaubt, wenn eine Funktionsstörung des Hauptschmiermittels (20) des mechanischen Systems (10) erfasst wird,
**dadurch gekennzeichnet, dass** der Tank (2) oberhalb der Leitung (4) und der Verteilermittel (5) angeordnet ist, damit die Schmierflüssigkeit unter der Wirkung der Schwerkraft ausgehend von dem Tank (2) in jede Leitung (4) und in jedes Verteilermittel (5) fließt, wobei jedes Verteilermittel (5) mindestens ein Begrenzungsmittel (6) aufweist zum Begrenzen des Schmierflüssigkeitsdurchsatzes an jedem Verteilermittel (5), und wobei jedes Verteilermittel im Inneren des mechanischen Systems (10) angeordnet ist, wobei jede Leitung (4), die jedes Verteilermittel (5) speist, mindestens teilweise im Inneren des mechanischen Systems (10) angeordnet ist, wobei die Schmierflüssigkeit, die in jeder Leitung (4) und in jedem Verteilermittel (5) fließt, somit durch das mechanische System (10) erhitzt wird und die Viskosität der Schmierflüssigkeit nach einer Funktionsstörung des Hauptschmiermittels (20) abnimmt, damit ein Durchsatz der Schmierflüssigkeit an jedem Verteilermittel (5) im Wesentlichen größer oder gleich einem minimalen Durchsatz ist, solange der Tank die Schmierflüssigkeit enthält.

2. Notschmiervorrichtung (1) nach Anspruch 1,
**dadurch gekennzeichnet, dass** der Tank (2) im Inneren des mechanischen Systems (10) angeordnet ist.

3. Notschmiervorrichtung (1) nach einem der Ansprüche 1 bis 2, **dadurch gekennzeichnet, dass** der Pegel *H1* der Schmierflüssigkeit in dem Tank (2) kleiner ist als der Abstand *H21, H22* zwischen dem Tank (2) und jedem Verteilermittel (5), wobei der Pegel *H1* und der Abstand *H21, H22* in Richtung der Schwerkraft definiert sind.

4. Notschmiervorrichtung (1) nach Anspruch 3,
**dadurch gekennzeichnet, dass** der Pegel *H1* und der Abstand *H21, H22* anfänglich definiert sind, damit das Abnehmen des Pegels *H1*, während die Notschmiervorrichtung (1) das mechanische System (10) schmiert, und das Abnehmen der Viskosität der Schmierflüssigkeit es erlauben, den Durchsatz der Schmierflüssigkeit an jedem Verteilermittel (5) größer oder gleich dem minimalen Durchsatz zu halten, solange der Tank die Schmierflüssigkeit enthält.

5. Notschmiervorrichtung (1) nach einem der Ansprüche 1 bis 4,
**dadurch gekennzeichnet, dass** das Auslösemittel (3) ein erstes Ventil (31) aufweist, das es erlaubt, den Tank (2) mit jeder Leitung (4) zu verbinden.

6. Notschmiervorrichtung (1) nach einem der Ansprüche 1 bis 4,
**dadurch gekennzeichnet, dass** das Auslösemittel (3) mehrere erste Ventile (31) aufweist, die an jedem Verteilermittel (5) positioniert sind.

7. Notschmiervorrichtung (1) nach einem der Ansprüche 1 bis 6,
**dadurch gekennzeichnet, dass** das Auslösemittel (3) ein zweites Ventil (32) aufweist, das es erlaubt, den Tank (2) zu belüften, wobei der Tank (2) abgeschlossen und dicht ist.

8. Notschmiervorrichtung (1) nach einem der Ansprüche 1 bis 7,
**dadurch gekennzeichnet, dass** jedes Begrenzungsmittel (6) eine Öffnung aufweist, deren erster Durchmesser größer oder gleich einem zweiten Minimalwert ist, um eine Verkokung der Schmierflüssigkeit zu verhindern.

9. Notschmiervorrichtung (1) nach Anspruch 8,
**dadurch gekennzeichnet, dass** der zweite Minimalwert zwischen 0,3 mm und 1,0 mm liegt.

10. Notschmiervorrichtung (1) nach einem der Ansprüche 1 bis 9,
**dadurch gekennzeichnet, dass** jede Leitung (4) einen zweiten Durchmesser aufweist, der größer oder gleich einem ersten Minimalwert ist, um eine ausreichende Aufheizung der Schmierflüssigkeit zu erlauben.

11. Notschmiervorrichtung (1) nach Anspruch 10,
**dadurch gekennzeichnet, dass** der erste Minimalwert zwischen 6 mm und 10 mm liegt.

12. Notschmiervorrichtung (1) nach einem der Ansprüche 1 bis 11,
**dadurch gekennzeichnet, dass** der minimale Durchsatz gleich dem Durchsatz des schwächsten Schmiermitteldurchsatzes an jedem Verteilermittel (5) beim Starten der Notschmiervorrichtung (1) ist.

13. Notschmiervorrichtung (1) nach einem der Ansprüche 1 bis 12,
**dadurch gekennzeichnet, dass** das Auslösemittel (3) elektrisch gesteuert wird.

14. Notschmiervorrichtung (1) nach einem der Ansprüche 1 bis 12,
**dadurch gekennzeichnet, dass** das Auslösemittel (3) pyrotechnisch gesteuert wird.

15. Notschmiervorrichtung (1) nach Anspruch 14,
**dadurch gekennzeichnet, dass** das Auslösemittel (3) und der Tank (2) sich in dem mechanischen System (10) befinden, wobei die pyrotechnische Steuerung thermisch ausgelöst wird, wobei das Auslösen erfolgt, sobald die Temperatur des Auslösemittels (3) einen vorbestimmten Schwellenwert erreicht.

16. Hauptleistungsgetriebe für ein Drehflügel-Luftfahrzeug,
**dadurch gekennzeichnet, dass** das Hauptleistungsgetriebe mit einer Notschmiervorrichtung (1) nach einem der Ansprüche 1 bis 15 versehen ist, wobei das mechanische System (10) das Hauptleistungsgetriebe ist.

## Claims

1. Emergency lubricating device (1), having simplified architecture, of a mechanical system (10), said emergency lubricating device (1) being equipped with a tank (2), a release means (3), at least one pipe (4) and at least one distributing means (5), said tank (2) containing a lubricating liquid and said release means (3) allowing said lubricating liquid to flow between said tank (2) and each distributing means (5) when it is detected that the main lubricating means (20) of said mechanical system (10) has malfunctioned,
**characterized in that** said tank (2) is arranged above said pipes (4) and said distributing means (5) such that said lubricating liquid flows under the action of Earth's gravity from said tank (2) into each pipe (4) and each distributing means (5), each distributing means (5) comprising at least one restricting means (6) for limiting the flow rate of said lubricating liquid in the region of each distributing means (5) and being arranged inside said mechanical system (10), each pipe (4) feeding each distributing means (5) being arranged inside said mechanical system (10) at least in part, said lubricating liquid flowing in each pipe (4) and in each distributing means (5) thus being heated by said mechanical system (10) and the viscosity of said lubricating liquid decreasing after a malfunction of said main lubricating means (20) such that a flow rate of said lubricating liquid in the region of each distributing means (5) is substantially equal to or greater than a minimum flow rate while said tank contains said lubricating liquid.

2. Emergency lubricating device (1) according to claim 1, **characterized in that** said tank (2) is arranged inside said mechanical system (10).

3. Emergency lubricating device (1) according to either claim 1 or claim 2, **characterized in that** the height *H1* of said lubricating liquid in said tank (2) is less than the distance *H21, H22* between said tank (2) and each distributing means (5), said height *H1* and said distance *H21, H22* being defined in the direction of gravity.

4. Emergency lubricating device (1) according to claim 3, **characterized in that** said height *H1* and said distance *H21, H22* are initially defined such that the decrease in said height *H1,* when said emergency lubricating device (1) lubricates said mechanical system (10), and said decrease in said viscosity of said lubricating liquid make it possible for said flow rate of said lubricating liquid in the region of each distributing means (5) to be substantially equal to or greater than said minimum flow rate while the tank contains said lubricating liquid.

5. Emergency lubricating device (1) according to any of claims 1 to 4, **characterized in that** said release means (3) comprises a first valve (31) for connecting said tank (2) and each pipe (4).

6. Emergency lubricating device (1) according to any of claims 1 to 4, **characterized in that** said release means (3) comprises a plurality of first valves (31) positioned in the region of each distributing means (5).

7. Emergency lubricating device (1) according to any of claims 1 to 6, **characterized in that** said release means (3) comprises a second valve (32) for venting said tank (2), said tank (2) being closed and sealed.

8. Emergency lubricating device (1) according to any of claims 1 to 7, **characterized in that** each restricting means (6) comprises an opening of which the first diameter is greater than or equal to a second minimum value in order to prevent coking of said lubricating liquid.

9. Emergency lubricating device (1) according to claim 8, **characterized in that** said second minimum value is between 0.3 mm and 1.0 mm.

10. Emergency lubricating device (1) according to any of claims 1 to 9, **characterized in that** each pipe (4) has a second diameter that is greater than or equal to a first minimum value in order to allow sufficient heating of said lubricating liquid.

11. Emergency lubricating device (1) according to claim 10, **characterized in that** said first minimum value is between 6 mm and 10 mm.

12. Emergency lubricating device (1) according to any of claims 1 to 11, **characterized in that** said minimum flow rate is equal to the lowest flow rate of said lubricating liquid in the region of each distributing means (5) when said emergency lubricating device (1) is started up.

13. Emergency lubricating device (1) according to any of claims 1 to 12, **characterized in that** said release means (3) is electrically controlled.

14. Emergency lubricating device (1) according to any of claims 1 to 12, **characterized in that** said release means (3) is pyrotechnically controlled.

15. Emergency lubricating device (1) according to claim 14, **characterized in that**, since said release means (3) and said tank (2) are located in said mechanical system (10), said pyrotechnic control is thermally triggered as soon as the temperature of said release means (3) reaches a predetermined threshold.

16. Main power transmission box for a rotary wing aircraft, **characterized in that** said main power transmission box is equipped with an emergency lubricating device (1) according to any of claims 1 to 15, said mechanical system (10) being said main power transmission box.
